# EUROPEAN PATENT APPLICATION

(11) **EP 3 086 509 A1**
(43) Date of publication of application: **26.10.2016**
(21) Application number: 14871785.3
(22) Date of filing: 27.06.2014
(51) Int. Cl.: H04L 12/24

(54) **FAILURE PROCESSING METHOD, DEVICE AND SYSTEM FOR NETWORK SERVICE NODE**

(30) Priority: 19.12.2013 CN 201310705848
(71) Applicant: ZTE Corporation, Shenzhen, Guangdong 518057 (CN)
(72) Inventor: YUAN, Bo, Shenzhen Guangdong 518057 (CN); FAN, Liang, Shenzhen Guangdong 518057 (CN); CHEN, Yong, Shenzhen Guangdong 518057 (CN)
(74) Representative: Carangelo, Pierluigi
(86) International application number: PCT/CN2014/081015
(87) International publication number: WO 2015/090026

(57) **Abstract**

Provided are a method, device and system for processing a failure of a network service node. The method includes that: a bridging data forwarding domain configured to forward a service between service nodes is established for the service nodes in a service node pool group, wherein when a service node fails, a next hop of a service router of the service node which has failed directs to the bridging data forwarding domain; and a user service is forwarded, by the bridging data forwarding domain, for a failed service node, which has failed, in the service node pool group. By means of the present disclosure, the problems in the related art that traffic migration between a failed node in a pool group service and a take-over service node is complex in configuration, inflexible in traffic forwarding and low efficiency in migration processing are solved, thereby achieving the effects of flexibly forwarding service traffics between service nodes and greatly improving the migration processing efficiency.

## Description

### Technical Field

The present disclosure relates to the field of mobile communications, and in particular to a method, device and system for processing a failure of a network service node.

### Background

As a broadband network is popularized on a large scale, an internet service type increases with rapid change, the quality of a service is continuously improved and a bandwidth requirement of a user increases rapidly, a broadband access network of a telecom operator faces an increasing load pressure, and a bandwidth capacity expansion speed of the operator cannot follow a demand growth speed of a broadband user gradually. Meanwhile, since diversities of habits and rest time and so on of users are more and more obvious, a traditional mode of expanding the capacity according to the number of newly-added users is high in cost and cannot meet a network development requirement.

The development of a broadband network needs to depend on sharing large-scale resources to effectively utilize resources, instead of blind physical bandwidth resources. In a traditional broadband network, network bandwidth is planned according to the number of users, so as to share bandwidth resources in cell-level and small-local-spot level, including line bandwidth resources and service node bandwidth resources. In view of a current network development speed, compared with the service node bandwidth resources, the line bandwidth resources are relatively sufficient, and the service node bandwidth resources have obviously encountered a great resource trouble. A representative problem refers to that most of users cannot enjoy a maximum bandwidth at an evening peak period, wherein the maximum bandwidth is promised by the operator. The reasons are that: most of the users are centralized in residential districts of a city at this period of time, the utilization rate of bandwidth resources of service nodes of the residential districts is extremely high, and service nodes of office districts of the city are commonly at a low use rate or even under an idle state. Conversely, the resource utilization rate of broadband network devices in the residential districts of the city at a working period is much lower than that at an evening peak period.

How to solve the problem about resource utilization efficiency of a broadband network so as to utilize existing network resources to the greatest extent, to reduce a frequency of expanding a capacity and to reduce a network cost input, which is one of main problems confronted by global telecom operators currently. In the field of broadband access, the improvement of the resource utilization rate of a service node (namely, a Broadband Remote Access Server (BRAS), a Service Router (SR) and other devices) is particularly taken as a main requirement. A mainstream technical solution in the current art is a pooling solution of service nodes, all-weather reasonable utilization of broadband resources in large-scale regions is achieved by means of large-scale service node resource sharing, and peak-valley resource complementation in different regions and resource sharing between different types of users are achieved under limited resources.

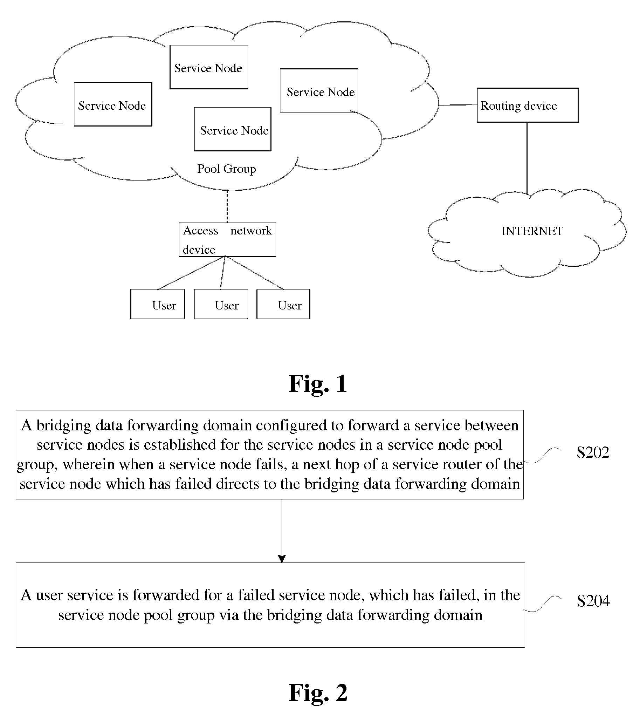

In terms of a technical solution for resource pooling of service nodes, resource sharing of user information and network information between different service nodes shall be achieved firstly, that is, different service nodes in a broadband network shall share access resources of the broadband network. Fig. 1 is a diagram of a network architecture for resource pooling in the related art. As shown in Fig. 1, a broadband user accesses a logical service node pool, and then is connected to the INTERNET or other networks via a routing device. The technology is required as follows.
1. All physically independent service nodes constitute a logical service node pool group, and a broadband user is physically connected to all service nodes in this service node pool group via an access network device. When accessing the logical service node pool group, the broadband user accesses a certain specific service node by actual affiliation according to a policy of the logical service node pool group.
2. When the broadband user accesses the service node pool group, a service node is selected from all service nodes in the service node pool group as a take-over service node of the service node accessed by the user by actual affiliation, and the service node to which the user is actually affiliated synchronizes user information to the take-over service node, wherein the user information includes an Internet Protocol (IP), Media Access Control (MAC) and the like of the user.
3. When the service node to which the user is actually affiliated fails, broadband user services of the failed node are switched, and the take-over service node takes over uplink/downlink service processing and traffic forwarding of broadband user of the failed service node.

That is, there is a problem needing to be solved in a service node pooling technology, that network traffics of some original failed node services will be forwarded to the failed node in a failure switching process of service nodes; and as the failed node is no longer in charge of services of the broadband user, the failed node needs to forward the service traffics of the broadband user to a take-over service node by means of a certain technology, and the take-over service node forwards the traffics to the broadband user.

In the related art, in order to solve the above problem, a general processing mode is adopted as follows. A next hop of a service traffic is appointed to be routed to a take-over service node by means of fixed configuration on a service node, or the service traffic is forwarded by fixedly configuring a Virtual Private Network (VPN) tunnel between a failed node and a take-over service node. The processing mode has a defect that the technology is based on peer-to-peer connection, it is necessary to appoint a destination take-over service node by means of configuration on a service node, and when the service node fails, the traffic is forwarded to the appointed service node.

In addition, when there are a plurality of service nodes in this pool group, any one service node possibly takes over a failed node service, and therefore it is inevitably necessary to perform peer-to-peer full mesh between a failed node and all service nodes when the above solution is adopted. The full mesh-based solution is complex undoubtedly. When there are N service nodes, 2^{N} mesh is needed, thereby making a pooling network overloaded. Thus, the service solution is more applicable to traffic forwarding between merely two service nodes in the pool group.

Meanwhile, according to a traditional traffic solution, a take-over service node is appointed on a device by fixed configuration, and the fixed configuration mode quite facilitates appointing of two devices in the pool group. Similarly, when there are N service nodes in the pool group, any service node is probably selected as a take-over service node with respect to a certain service node. Thus, selection of the take-over service node at each time is uncertain, and it is certainly unreasonable to select the take-over service node by static configuration.

Thus, the problems that traffic migration between a failed node in a pool group service and a take-over service node is complex in configuration, inflexible in traffic forwarding and low efficiency in migration processing exist in the related art.

### Summary

The present disclosure provides a method, device and system for processing a failure of a network service node, which are intended to solve, at least, the problems in the related art that traffic migration between a failed node in a pool group service and a take-over service node is complex in configuration, inflexible in traffic forwarding and low efficiency in migration processing.

According to one aspect of the present disclosure, a method for processing a failure of a network service node is provided, comprising: establishing a bridging data forwarding domain configured to forward a service between service nodes for the service nodes in a service node pool group, wherein when a service node fails, a next hop of a service router of the service node which has failed directs to the bridging data forwarding domain; and forwarding, by the bridging data forwarding domain, a user service for a failed service node, which has failed, in the service node pool group.

In an example embodiment, forwarding, by the bridging data forwarding domain, the user service for the failed service node, which has failed, in the service node pool group comprises: determining a take-over service node configured to take over the user service for the failed service node; refreshing, in the bridging data forwarding domain, a service node which takes over the user service as the take-over service node; and forwarding, by the refreshed take-over service node, the user service for the failed service node, which has failed, in the service node pool group.

In an example embodiment, refreshing, in the bridging data forwarding domain, the service node which takes over the user service as the take-over service node comprises: refreshing the service node which takes over the user service as the take-over service node in a mode that the take-over service node issues, in the bridging data forwarding domain, that a source Media Access Control (MAC) address of the user service is taken as a source MAC address.

In an example embodiment, refreshing, in the bridging data forwarding domain, the service node which takes over the user service as the take-over service node comprises: triggering, when the take-over service node which takes over the user service is determined, refreshing, in the bridging data forwarding domain, of the service node which takes over the user service as the take-over service node; and/or, triggering, when it is determined that the failed service node exists, refreshing, in the bridging data forwarding domain, of the service node which takes over the user service as the take-over service node.

In an example embodiment, before forwarding, by the bridging data forwarding domain, the user service for the failed service node, which has failed, in the service node pool group, further comprising: judging whether the failed service node receives a service traffic, sent to a user, after having failed; and when a judgment result is that the failed service node receives the service, sent to the user, after having failed, forwarding all service traffics to the bridging data forwarding domain, wherein the all service traffics are sent to the user and received by the failed service node after having failed.

According to another aspect of the embodiment, a device for processing a failure of a network service node is provided, comprising: an establishing component, configured to establish a bridging data forwarding domain configured to forward a service between service nodes for the service nodes in a service node pool group, wherein when a service node fails, a next hop of a service router of the service node which has failed directs to the bridging data forwarding domain; and a first forwarding component, configured to forward, by the bridging data forwarding domain, a user service for a failed service node, which has failed, in the service node pool group.

In an example embodiment, the first forwarding component comprises: a determining element, configured to determine a take-over service node configured to take over the user service for the failed service node; a refreshing element, configured to refresh, in the bridging data forwarding domain, a service node which takes over the user service as the take-over service node; and a forwarding element, configured to forward, by the refreshed take-over service node, the user service for the failed service node, which has failed, in the service node pool group.

In an example embodiment, the refreshing element comprises: a refreshing sub-element, configured to refresh the service node which takes over the user service as the take-over service node in a mode that the take-over service node issues, in the bridging data forwarding domain, that a source Media Access Control (MAC) address of the user service is taken as a source MAC address.

In an example embodiment, the refreshing element comprises: a first triggering sub-element, configured to trigger, when the take-over service node which takes over the user service is determined, refreshing, in the bridging data forwarding domain, of the service node which takes over the user service as the take-over service node; and/or, a second triggering sub-element, configured to trigger, when it is determined that the failed service node exists, refreshing, in the bridging data forwarding domain, of the service node which takes over the user service as the take-over service node.

In an example embodiment, the device further comprising: a judging component, configured to judge whether the failed service node receives a service traffic, sent to a user, after having failed; and a second forwarding component, configured to forward, when a judgment result is that the failed service node receives the service, sent to the user, after having failed, all service traffics to the bridging data forwarding domain, wherein the all service traffics are sent to the user and received by the failed service node after having failed.

According to another aspect of the present disclosure, a system for processing a failure of a network service node is provided, comprising the device according to any one of the above descriptions.

By means of the present disclosure, a bridging data forwarding domain configured to forward a service between service nodes is established for the service nodes in a service node pool group, wherein when a service node fails, a next hop of a service router of the service node which has failed directs to the bridging data forwarding domain; and a user service is forwarded, by the bridging data forwarding domain, for a failed service node, which has failed, in the service node pool group. The problems in the related art that traffic migration between a failed node in a pool group service and a take-over service node is complex in configuration, inflexible in traffic forwarding and low efficiency in migration processing are solved, thereby achieving the effects of flexibly forwarding service traffics between service nodes and greatly improving the migration processing efficiency.

### Brief Description of the Drawings

The drawings illustrated herein are intended to provide further understanding of the present disclosure, and constitute a part of the present disclosure. The schematic embodiments and illustrations of the present disclosure are intended to explain the present disclosure, and do not form improper limits to the present disclosure. In the drawings:
Fig. 1 is a diagram of a network architecture for resource pooling in the related art;
Fig. 2 is a flow chart of a method for processing a failure of a network service node according to an embodiment of the present disclosure;
Fig. 3 is a structure block diagram of a device for processing a failure of a network service node according to an embodiment of the present disclosure;
Fig. 4 is a structure block diagram of the first forwarding component 34 in the device for processing the failure of the network service node according to an embodiment of the present disclosure;
Fig. 5 is a structure block diagram 1 of the refreshing element 44 in the first forwarding component 34 in the device for processing the failure of the network service node according to an embodiment of the present disclosure;
Fig. 6 is a structure block diagram 2 of the refreshing element 44 in the first forwarding component 34 in the device for processing the failure of the network service node according to an embodiment of the present disclosure;
Fig. 7 is an example structure block diagram of the device for processing the failure of the network service node according to an embodiment of the present disclosure;
Fig. 8 is a structure block diagram of a system for processing a failure of a network service node according to an embodiment of the present disclosure;
Fig. 9 is a flow chart of a traffic processing solution between service nodes of a shared broadband network according to an embodiment of the present disclosure;
Fig. 10 is a diagram of connection between a service node and a take-over service node according to an embodiment of the present disclosure;
Fig. 11 is a diagram of networking according to an example implementation mode of the present disclosure;
Fig. 12 is a flow chart of a first embodiment according to an example implementation mode of the present disclosure;
Fig. 13 is a flow chart of a second embodiment according to an example implementation mode of the present disclosure; and
Fig. 14 is a flow chart of a third embodiment according to an example implementation mode of the present disclosure.

### Detailed Description of the Embodiments

The present disclosure will be illustrated below with reference to the drawings and the embodiments in detail. It is important to note that the embodiments of the present disclosure and the characteristics in the embodiments can be combined under the condition of no conflicts.

In this embodiment, a method for processing a failure of a network service node is provided. Fig. 2 is a flow chart of a method for processing a failure of a network service node according to an embodiment of the present disclosure. As shown in Fig. 2, the flow includes the steps as follows.

Step S202: A bridging data forwarding domain configured to forward a service between service nodes is established for the service nodes in a service node pool group, wherein when a service node fails, a next hop of a service router of the service node which has failed directs to the bridging data forwarding domain.

Step S204: A user service is forwarded, by the bridging data forwarding domain, for a failed service node, which has failed, in the service node pool group.

By means of the steps, a bridging data forwarding domain configured to forward a service between service nodes is established for the service nodes in a service node pool group, and a next hop of a service router of a failed service node is configured to direct to the bridging data forwarding domain; compared with the related art in which a next-hop take-over service node is statically configured for the failed service node, the present disclosure in which the bridging data forwarding domain can dynamically determine a take-over service node for the failed service node, solves the problems in the related art that traffic migration between the failed node in a pool group service and the take-over service node is complex in configuration, inflexible in traffic forwarding and low efficiency in migration processing, thereby achieving the effects of flexibly forwarding service traffics between the service nodes and greatly improving the migration processing efficiency.

When the user service is forwarded for the failed service node, which has failed, in the service node pool group via the bridging data forwarding domain, the following example processing mode may be adopted. A take-over service node configured to take over the user service is determined for the failed service node; a service node which takes over the user service is refreshed as the take-over service node in the bridging data forwarding domain; and the user service is forwarded, by the refreshed take-over service node, for the failed service node, which has failed, in the service node pool group. Wherein, the service node which takes over the user service may be refreshed as the take-over service node in the bridging data forwarding domain in multiple modes. For example, the service node which takes over the user service is refreshed as the take-over service node in a mode that the take-over service node issues, in the bridging data forwarding domain, that a source MAC address of the user service is taken as a source MAC address. By means of such processing, when the bridging data forwarding domain receives data traffics associated with the user service, the data traffics are forwarded according to the take-over service node corresponding to the issued source MAC address.

In an example embodiment, the service node which takes over the user service may be refreshed as the take-over service node in the bridging data forwarding domain at a plurality of time points. For example, when the take-over service node which takes over the user service is determined, refreshing, in the bridging data forwarding domain, of the service node which takes over the user service as the take-over service node may be triggered. For another example, when it is determined that the failed service node exists, refreshing, in the bridging data forwarding domain, of the service node which takes over the user service as the take-over service node may be triggered.

In order to avoid that service traffics are still received by the failed service node after the failed service node has failed, thereby making the service traffic successively processed by the take-over service node, discontinuous, before the user service is forwarded by the bridging data forwarding domain, for the failed service node, which has failed, in the service node pool group, it may be judged whether the failed service node receives a service traffic, sent to a user, after having failed; and when a judgment result is that the failed service node receives the service, sent to the user, after having failed, all service traffics which are sent to the user and received by the failed service node after having failed are forwarded to the bridging data forwarding domain. By means of such processing, the bridging data forwarding domain receives the service traffics forwarded by the failed service node, and sends the received service traffics to the take-over service node, then the take-over service node forwards the service traffics to the user, thereby achieving the completeness of taking over by the taken-over service node a service of a failed service node.

In this embodiment, a device for processing a failure of a network service node is further provided. The device is configured to implement the above embodiment and an example implementation mode. Those which have been illustrated will not be elaborated herein. Just as a term 'component' used below, the combination of software and/or hardware with predetermined functions may be implemented. Although the device described by the following embodiment is better implemented by software, the implementation of hardware or the combination of software and hardware may be possible and conceived.

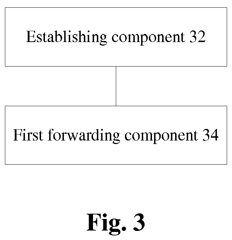

Fig. 3 is a structure block diagram of a device for processing a failure of a network service node according to an embodiment of the present disclosure. As shown in Fig. 3, the device includes an establishing component 32 and a first forwarding component 34, and the apparatus will be illustrated below.

The establishing component 32 is configured to establish a bridging data forwarding domain configured to forward a service between service nodes for the service nodes in a service node pool group, wherein when a service node fails, a next hop of a service router of the service node which has failed directs to the bridging data forwarding domain; and the first forwarding component 34 is connected to the establishing component 32 and is configured to forward, by the bridging data forwarding domain, a user service for a failed service node, which has failed, in the service node pool group.

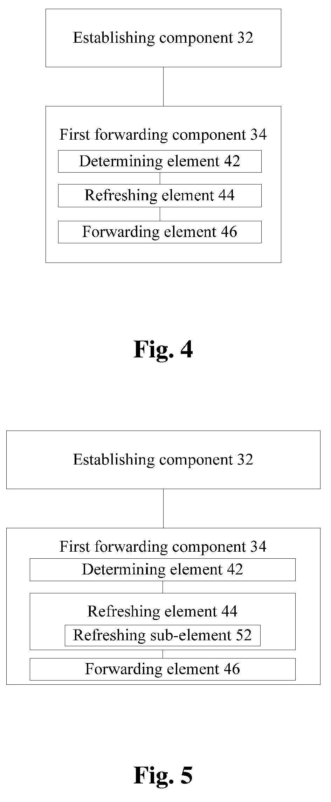

Fig. 4 is a structure block diagram of the first forwarding component 34 in the device for processing the failure of the network service node according to an embodiment of the present disclosure. As shown in Fig. 4, the first forwarding component 34 includes a determining element 42, a refreshing element 44 and a forwarding element 46, and the first forwarding component 34 will be illustrated below.

The determining element 42 is configured to determine a take-over service node configured to take over the user service for the failed service node; the refreshing element 44 is connected to the determining element 42 and is configured to refresh, in the bridging data forwarding domain, a service node which takes over the user service as the take-over service node; and the forwarding element 46 is connected to the refreshing element 44 and is configured to forward, by the refreshed take-over service node, the user service for the failed service node, which has failed, in the service node pool group.

Fig. 5 is a structure block diagram 1 of the refreshing element 44 in the first forwarding component 34 in the device for processing the failure of the network service node according to an embodiment of the present disclosure. As shown in Fig. 5, the refreshing element 44 includes a refreshing sub-element 52, and the refreshing element 44 will be illustrated below.

The refreshing sub-element 52 is configured to refresh the service node which takes over the user service as the take-over service node in a mode that the take-over service node issues, in the bridging data forwarding domain, that a source MAC address of the user service is taken as a source MAC address.

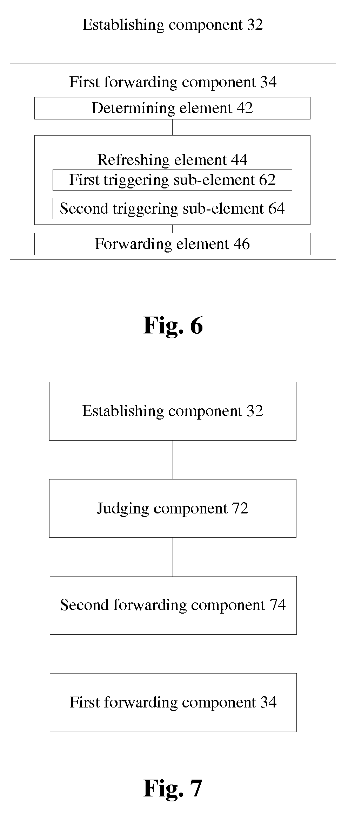

Fig. 6 is a structure block diagram 2 of the refreshing element 44 in the first forwarding component 34 in the device for processing the failure of the network service node according to an embodiment of the present disclosure. As shown in Fig. 6, the refreshing element 44 includes a first triggering sub-element 62 and/or a second triggering sub-element 64, and the refreshing element 44 will be illustrated below.

The first triggering sub-element 62 is configured to trigger, when the take-over service node which takes over the user service is determined, refreshing, in the bridging data forwarding domain, of the service node which takes over the user service as the take-over service node.

The second triggering sub-element 64 is configured to trigger, when it is determined that the failed service node exists, refreshing, in the bridging data forwarding domain, of the service node which takes over the user service as the take-over service node.

Fig. 7 is an example structure block diagram of the device for processing the failure of the network service node according to an embodiment of the present disclosure. As shown in Fig. 7, the device, in addition to all components shown in Fig. 3, further includes a judging component 72 and a second forwarding component 74, and the device will be illustrated below.

The judging component 72 is connected to the establishing component 32 and is configured to judge whether the failed service node receives a service traffic, sent to a user, after having failed; and the second forwarding component 74 is connected to the judging component 72 and is configured to forward, when a judgment result is that the failed service node receives the service, sent to the user, after having failed, all service traffics to the bridging data forwarding domain, wherein the all service traffics are sent to the user and received by the failed service node after having failed.

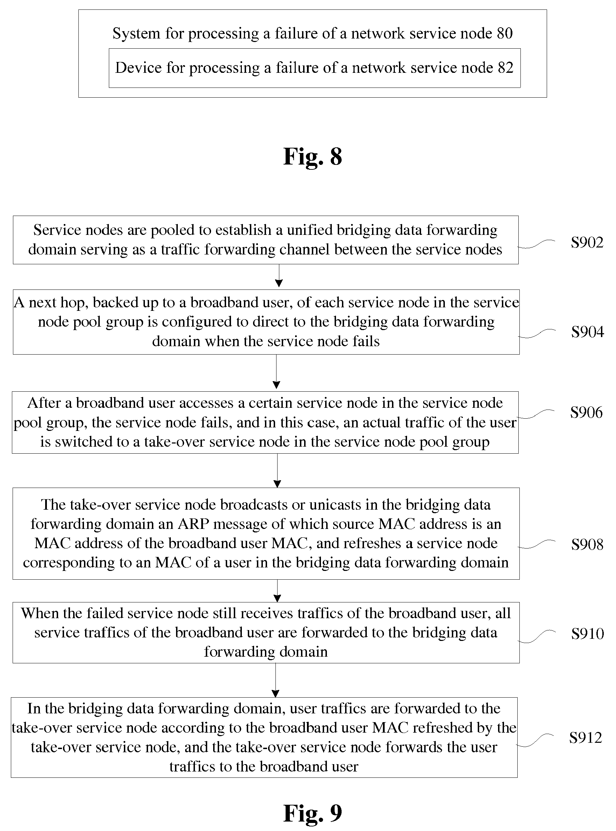

Fig. 8 is a structure block diagram of a system for processing a failure of a network service node according to an embodiment of the present disclosure. As shown in Fig. 8, the system for processing the failure of the network service node 80 includes the device for processing the failure of the network service node according to any one of the above descriptions.

By means of a shared solution for processing a traffic between service nodes in a broadband network provided by the above embodiments and the example implementation mode, flexible processing for service traffic forwarding between service nodes is achieved, and a better dynamic perception on a take-over service node for traffic-forwarding is provided, so that a solution for forwarding service traffic between the service nodes is more adaptive to a development demand of a broadband network. The solution will be specifically described below.

Fig. 9 is a flow chart of a shared traffic processing solution between service nodes in a broadband network according to an embodiment of the present disclosure. As shown in Fig. 9, the flow includes the steps as follows.

Step S902: Service nodes are pooled to establish a unified bridging data forwarding domain serving as a traffic forwarding channel between the service nodes,
wherein a forwarding reference of the bridging data forwarding domain may be Transmission Control Protocol (TCP)/IP two-layer forwarding, including common two-layer exchange forwarding and two-layer forwarding based on a Virtual Private Lan Service (VPLS).

In an example embodiment, the service nodes in a service node pool group access the bridging data forwarding domain, and a Hub-Spoke networking mode may be adopted.

Step S904: A next hop, backed up to a broadband user, of each service node in the service node pool group is configured to direct to the bridging data forwarding domain when the service node fails.

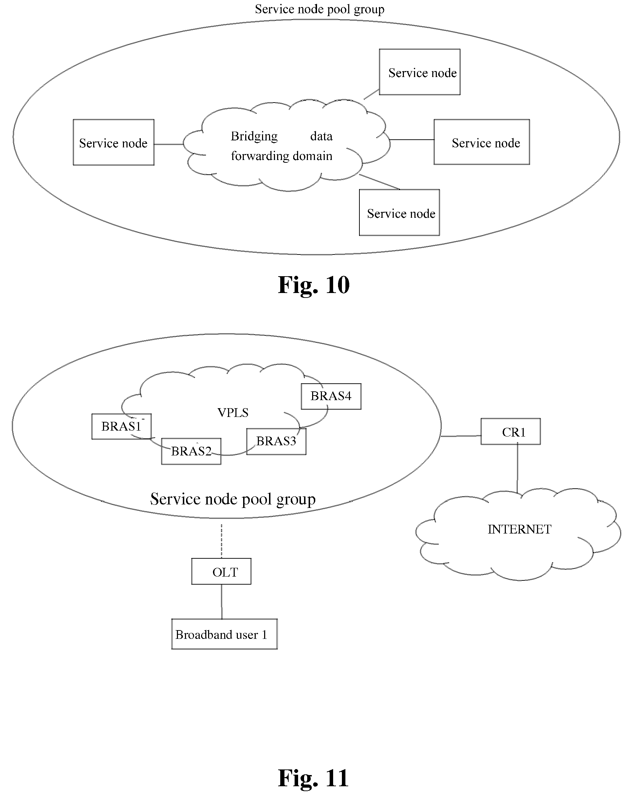

For a certain service node in the service node pool group, when a service fails, a take-over service node is the entire bridging data forwarding domain, and other specific service nodes in the service node pool group are no longer appointed. Fig. 10 is a diagram of connection between a service node and a take-over service node according to an embodiment of the present disclosure. As shown in Fig. 10, a real take-over service node may be any one of other nodes in the service node pool group, and is connected to the service node via the bridging data forwarding domain.

Step S906: After the broadband user accesses a certain service node in the service node pool group, the service node fails, and in this case, an actual traffic of the user is switched to a take-over service node in the service node pool group.

Step S908: The take-over service node broadcasts or unicasts in the bridging data forwarding domain an Address Resolution Protocol (ARP) message of which source MAC address is an MAC address of the broadband user, and refreshes a service node corresponding to an MAC of a user in the bridging data forwarding domain,
wherein for the MAC refreshing process, when the service node pool group determines the take-over service node with respect to the service node, the take-over service node may start the MAC refreshing process of the broadband user regularly.

For the MAC refreshing process, when the service node fails, the take-over service node may start the MAC refreshing process of the broadband user.

It is important to note that other members connected to the bridging data forwarding domain in the service node pool group do not process the ARP message received from the bridging data forwarding domain.

In addition, in the MAC refreshing process, a certain delay may exist, and after the take-over service node determines that the delay expires, MAC refreshing is performed.

Step S910: When the failed service node still receives traffics of the broadband user, all service traffics of the broadband user are forwarded to the bridging data forwarding domain.

Step S912: In the bridging data forwarding domain, user traffics are forwarded to the take-over service node according to the broadband user MAC refreshed by the take-over service node, and the take-over service node forwards the user traffics to the broadband user.

By means of the above solution, the problem about migration of user traffics between a failed service node and a take-over service node when there are a plurality of devices in a service node pool group may be completely solved, and meanwhile, dynamic selection and traffic migration of the take-over service node in the service node pool group are more effectively supported.

Different scenarios applied by the example implementation mode of the present disclosure will be illustrated below with reference to the drawings.

### First embodiment:

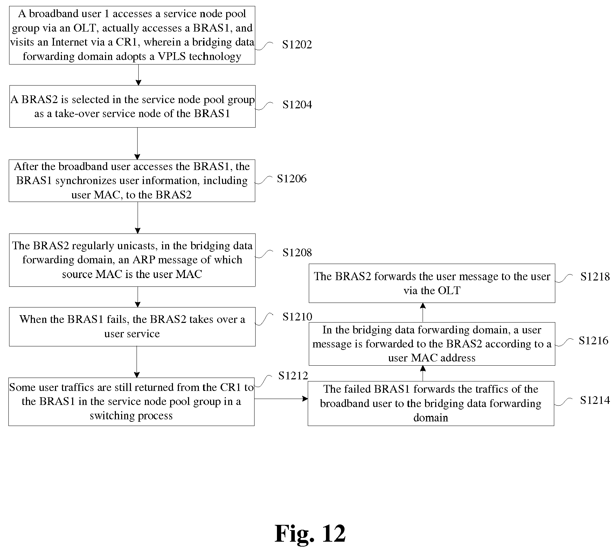

Fig. 11 is a diagram of networking according to an example implementation mode of the present disclosure. As shown in Fig. 11, a service node in Fig. 11 is illustrated by taking a broadband Remote Access Server (BRAS) as an example. For example, a BRAS1, a BRAS2, a BRAS3 and a BRAS4 in Fig. 11 are service nodes, a CR1 is a device connected to an Internet in a service node pool group, and an Optical Line Terminal (OLT) is an access network device. Fig. 12 is a flow chart of a first embodiment according to an example implementation mode of the present disclosure. As shown in Fig. 12, the flow includes the steps as follows.

Step S1202: A broadband user 1 accesses a service node pool group via the OLT, actually accesses the BRAS1, and visits the Internet via the CR1, wherein a bridging data forwarding domain adopts a VPLS technology.

Step S1204: The BRAS2 is selected in the service node pool group as a take-over service node of the BRAS1.

Step S1206: After the broadband user accesses the BRAS1, the BRAS1 synchronizes user information, including user MAC, to the BRAS2.

Step S1208: The BRAS2 regularly unicasts, in the bridging data forwarding domain, an ARP message of which source MAC is the user MAC.

Step S1210: When the BRAS1 fails, the BRAS2 takes over a user service.

Step S1212: Some user traffics are still returned from the CR1 to the BRAS1 in the service node pool group in a switching process.

Step S1214: The failed BRAS1 forwards the traffics of the broadband user to the bridging data forwarding domain.

Step S1216: In the bridging data forwarding domain, a user message is forwarded to the BRAS2 according to a user MAC address.

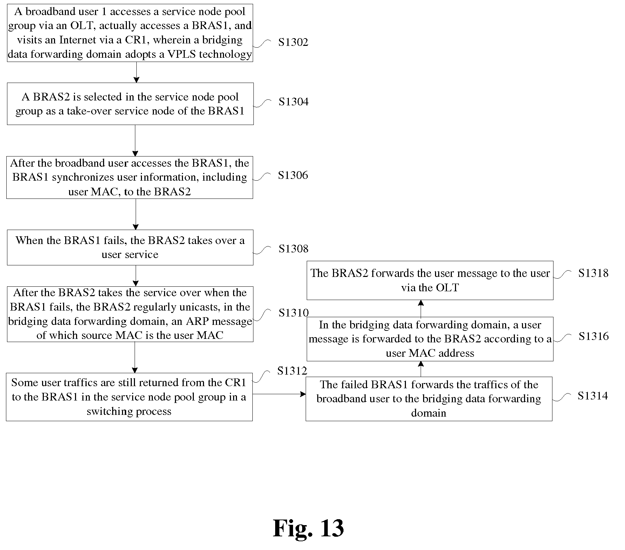

Step S1218: The BRAS2 forwards the user message to the user via the OLT. Second embodiment:
Referring to a networking diagram shown in Fig. 11, a BRAS1, a BRAS2, a BRAS3 and a BRAS4 in Fig. 11 are service nodes, a CR1 is a device connected to an Internet in a service node pool group, and an OLT is an access network device. Different from the first embodiment, the second embodiment embodies that refreshing of user MAC in a bridging data forwarding domain is performed after a service node fails. Fig. 13 is a flow chart of a second embodiment according to an example implementation mode of the present disclosure. As shown in Fig. 13, the flow includes the steps as follows.

Step S1302: A broadband user 1 accesses a service node pool group via the OLT, actually accesses the BRAS1, and visits the Internet via the CR1, wherein a bridging data forwarding domain adopts a VPLS technology.

Step S1304: The BRAS2 is selected in the service node pool group as a take-over service node of the BRAS1.

Step S1306: After the broadband user accesses the BRAS1, the BRAS1 synchronizes user information, including user MAC, to the BRAS2.

Step S1308: When the BRAS1 fails, the BRAS2 takes over a user service.

Step S1310: After the BRAS2 takes the service over when the BRAS1 fails, the BRAS2 regularly unicasts, in the bridging data forwarding domain, an ARP message of which source MAC is the user MAC.

Step S1312: Some user traffics are still returned from the CR1 to the BRAS1 in the service node pool group in a switching process.

Step S1314: The failed BRAS1 forwards the traffics of the broadband user to the bridging data forwarding domain.

Step S1316: In the bridging data forwarding domain, a user message is forwarded to the BRAS2 according to a user MAC address.

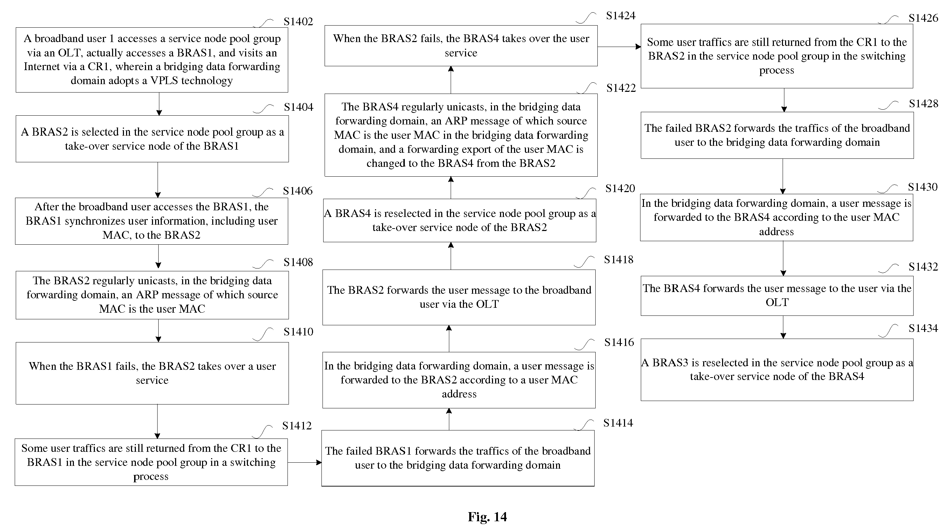

Step S1318: The BRAS2 forwards the user message to the user via the OLT. Third embodiment:
Referring to a networking diagram shown in Fig. 11, a BRAS1, a BRAS2, a BRAS3 and a BRAS4 in Fig. 11 are service nodes, a CR1 is a device connected to an Internet in a service node pool group, and an OLT is an access network device. Different from the first embodiment, the third embodiment describes a continuous failure processing mode of a service node in the service node pool group. Fig. 14 is a flow chart of a third embodiment according to an example implementation mode of the present disclosure. As shown in Fig. 14, the flow includes the steps as follows.

Step S1402: A broadband user 1 accesses a service node pool group via the OLT, actually accesses the BRAS1, and visits the Internet via the CR1, wherein a bridging data forwarding domain adopts a VPLS technology.

Step S1404: The BRAS2 is selected in the service node pool group as a take-over service node of the BRAS1.

Step S1406: After the broadband user accesses the BRAS1, the BRAS1 synchronizes user information, including user MAC, to the BRAS2.

Step S1408: The BRAS2 regularly unicasts, in the bridging data forwarding domain, an ARP message of which source MAC is the user MAC.

Step S1410: When the BRAS1 fails, the BRAS2 takes over a user service.

Step S1412: Some user traffics are still returned from the CR1 to the BRAS1 in the service node pool group in a switching process.

Step S1414: The failed BRAS1 forwards the traffics of the broadband user to the bridging data forwarding domain.

Step S1416: In the bridging data forwarding domain, a user message is forwarded to the BRAS2 according to a user MAC address.

Step S1418: The BRAS2 forwards the user message to the broadband user via the OLT.

Step S1420: The BRAS4 is reselected in the service node pool group as a take-over service node of the BRAS2.

Step S1422: The BRAS4 regularly unicasts, in the bridging data forwarding domain, an ARP message of which source MAC is the user MAC, and a forwarding export of the user MAC is changed to the BRAS4 from the BRAS2.

Step S1424: When the BRAS2 fails, the BRAS4 takes over the user service.

Step S1426: Some user traffics are still returned from the CR1 to the BRAS2 in the service node pool group in the switching process.

Step S1428: The failed BRAS2 forwards the traffics of the broadband user to the bridging data forwarding domain.

Step S1430: In the bridging data forwarding domain, a user message is forwarded to the BRAS4 according to the user MAC address.

Step S1432: The BRAS4 forwards the user message to the user via the OLT.

Step S1434: The BRAS3 is reselected in the service node pool group as a take-over service node of the BRAS4.

Obviously, those skilled in the art shall understand that all modules or all steps in the present disclosure may be implemented by using a general calculation apparatus, may be centralized on a single calculation apparatus or may be distributed on a network composed of a plurality of calculation apparatuses. Optionally, they may be implemented by using executable program codes of the calculation apparatuses. Thus, they may be stored in a storage apparatus and executed by the calculation apparatuses, the shown or described steps may be executed in a sequence different from this sequence under certain conditions, or they are manufactured into each integrated circuit module respectively, or a plurality of modules or steps therein are manufactured into a single integrated circuit module. Thus, the present disclosure is not limited to the combination of any specific hardware and software.

The above is only the preferred embodiments of the present disclosure, and is not intended to limit the present disclosure. There may be various modifications and variations in the present disclosure for those skilled in the art. Any modifications, equivalent replacements, improvements and the like within the spirit and principle of the present disclosure shall fall within the protection scope of the present disclosure.

### Industrial Applicability

As above, by means of the above embodiments and example implementation modes, the problems in the related art that traffic migration between a failed node in a service node pool group and a take-over service node is complex in configuration, inflexible in traffic forwarding and low efficiency in migration processing are solved, thereby achieving the effects of flexibly forwarding service traffics between service nodes and greatly improving the migration processing efficiency.

## Claims

1. A method for processing a failure of a network service node, comprising:
establishing a bridging data forwarding domain configured to forward a service between service nodes for the service nodes in a service node pool group, wherein when a service node fails, a next hop of a service router of the service node which has failed directs to the bridging data forwarding domain; and
forwarding, by the bridging data forwarding domain, a user service for a failed service node, which has failed, in the service node pool group.

2. The method as claimed in claim 1, wherein forwarding, by the bridging data forwarding domain, the user service for the failed service node, which has failed, in the service node pool group comprises:
determining a take-over service node configured to take over the user service for the failed service node;
refreshing, in the bridging data forwarding domain, a service node which takes over the user service as the take-over service node; and
forwarding, by the refreshed take-over service node, the user service for the failed service node, which has failed, in the service node pool group.

3. The method as claimed in claim 2, wherein refreshing, in the bridging data forwarding domain, the service node which takes over the user service as the take-over service node comprises:
refreshing the service node which takes over the user service as the take-over service node in a mode that the take-over service node issues, in the bridging data forwarding domain, that a source Media Access Control, MAC, address of the user service is taken as a source MAC address.

4. The method as claimed in claim 2, wherein refreshing, in the bridging data forwarding domain, the service node which takes over the user service as the take-over service node comprises:
triggering, when the take-over service node which takes over the user service is determined, refreshing, in the bridging data forwarding domain, of the service node which takes over the user service as the take-over service node; and/or,
triggering, when it is determined that the failed service node exists, refreshing, in the bridging data forwarding domain, of the service node which takes over the user service as the take-over service node.

5. The method as claimed in any one of claims 1 to 4, wherein before forwarding, by the bridging data forwarding domain, the user service for the failed service node, which has failed, in the service node pool group, further comprising:
judging whether the failed service node receives a service traffic, sent to a user, after having failed; and
when a judgment result is that the failed service node receives the service, sent to the user, after having failed, forwarding all service traffics to the bridging data forwarding domain, wherein the all service traffics are sent to the user and received by the failed service node after having failed.

6. A device for processing a failure of a network service node, comprising:
an establishing component, configured to establish a bridging data forwarding domain configured to forward a service between service nodes for the service nodes in a service node pool group, wherein when a service node fails, a next hop of a service router of the service node which has failed directs to the bridging data forwarding domain; and
a first forwarding component, configured to forward, by the bridging data forwarding domain, a user service for a failed service node, which has failed, in the service node pool group.

7. The apparatus as claimed in claim 6, wherein the first forwarding component comprises:
a determining element, configured to determine a take-over service node configured to take over the user service for the failed service node;
a refreshing element, configured to refresh, in the bridging data forwarding domain, a service node which takes over the user service as the take-over service node;and
a forwarding element, configured to forward, by the refreshed take-over service node, the user service for the failed service node, which has failed, in the service node pool group.

8. The apparatus as claimed in claim 7, wherein the refreshing element comprises:
a refreshing sub-element, configured to refresh the service node which takes over the user service as the take-over service node in a mode that the take-over service node issues, in the bridging data forwarding domain, that a source Media Access Control, MAC, address of the user service is taken as a source MAC address.

9. The apparatus as claimed in claim 7, wherein the refreshing element comprises:
a first triggering sub-element, configured to trigger, when the take-over service node which takes over the user service is determined, refreshing, in the bridging data forwarding domain, of the service node which takes over the user service as the take-over service node; and/or,
a second triggering sub-element, configured to trigger, when it is determined that the failed service node exists, refreshing, in the bridging data forwarding domain, of the service node which takes over the user service as the take-over service node.

10. The apparatus as claimed in any one of claims 6 to 9, further comprising:
a judging component, configured to judge whether the failed service node receives a service traffic, sent to a user, after having failed; and
a second forwarding component, configured to forward, when a judgment result is that the failed service node receives the service, sent to the user, after having failed, all service traffics to the bridging data forwarding domain, wherein the all service traffics are sent to the user and received by the failed service node after having failed.

11. A system for processing a failure of a network service node, comprising the device as claimed in any one of claims 6 to 10.
